Europäisches Patentamt

European Patent Office

Office européen des brevets

(19)

(11) **EP 1 283 072 A1**

(12) **EUROPEAN PATENT APPLICATION**

(43) Date of publication:
**12.02.2003 Bulletin 2003/07**

(51) Int Cl.⁷: **B01J 20/10**, B01J 20/02, B01J 20/08, B01J 20/16, B01J 20/32

(21) Application number: **01119181.4**

(22) Date of filing: **08.08.2001**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **THE PROCTER & GAMBLE COMPANY**
**Cincinnati, Ohio 45202 (US)**

(72) Inventors:
  • **Corzani, Italo**
    **66100 Chieti (IT)**

• **Rossi, Sergio**
  **44100 Ferrara (IT)**
• **Rathousky, Jiri**
  **182 23 Prague 8 (CZ)**
• **Zukal, Arnost**
  **182 23 Prague 8 (CZ)**

(74) Representative: **Veronese, Pancrazio et al**
  **Procter & Gamble Italia S.p.A.**
  **Italian Research Center**
  **Via Aterno 92/94**
  **66020 Sambuceto di San Giovanni Teatino (Chieti) (IT)**

(54) **Doped adsorbent materials with enhanced activity**

(57)     A method is disclosed for increasing the activity of doped inorganic adsorbent materials in the adsorption of selected solute species from a gas-phase or from a fluid-phase. The method consists in selecting the type, or the amount, or the molecular dimensions of the dopant or dopants, or also in tailoring the pore structure of the doped inorganic adsorbent material through doping. Doped inorganic adsorbent materials produced with said method, and showing enhanced activity towards selected solute species, are also disclosed. The improved doped inorganic adsorbent materials are suitable in a number of different fields where adsorption of one or more selected solute species from a free fluid phase is needed.

EP 1 283 072 A1

## Description

FIELD OF THE INVENTION

The invention relates to materials for adsorbing selected species from gaseous or liquid phases.

BACKGROUND OF THE INVENTION

Adsorption of solute species from a free fluid phase, i.e. from gaseous or liquid materials hereinafter referred to as a gas-phase or a liquid-phase respectively, finds utility in a number of different fields. Examples of industrial processes involving adsorption comprise, among gas-phase applications, dehydration of gases; odour removal and toxic gas removal in ventilating systems or from vent gases for air-pollution control; separation of rare gases; and among liquid-phase applications, decolorization, drying, or degumming of petroleum fractions; odour, taste, and colour removal from municipal water supplies; decolorization of vegetable and animal oils; clarification of beverages and of pharmaceutical preparations; recovery of vitamins and other products from fermentation mixtures; purification of process effluents for control of water pollution, etc.

Many different materials have been used and disclosed in the art as adsorbents in the various applications listed above, typically inorganic or carbonaceous materials such as for example activated alumina; siliceous adsorbents comprising natural and synthetic aluminosilicates such as zeolites, e.g. zeolite A; active silica's, silica gel, silicates, carbons, charcoal, etc.

Different methods are known in the art, which are aimed to the enhancement of the adsorption properties of said inorganic adsorbent materials, said adsorption properties in turn comprising either the efficiency of adsorption/removal, hereinafter referred to as efficiency of removal, (generally corresponding to the percent decrease in the concentration of a target molecule, corresponding to the solute specie, in a gas- or liquid-phase before and after contact with the adsorbent material), or the adsorption capacity (i.e. grams of adsorbed target molecule per gram of adsorbent material at the saturation), or the selectivity towards particular molecules or classes of molecules, or the kinetics of adsorption, or combinations thereof.

Such enhancements can be obtained through suitable chemical and/or morphological modifications of the surface of the adsorbent materials. Typical examples of morphological modification are the various techniques known in the art to synthesize molecular sieves, e.g. zeolites, having suitable dimensions of voids in their crystalline structure. A typical example of chemical modification is the treatment of charcoal with steam at high temperature in order to create a new microporous structure and to oxidize its surface. More in general, chemical modification of the surface can consist in inserting on the surface of the adsorbent material new chemical species (e.g. different atoms or functional groups, and generally through chemical bonds with the substrate), which are capable of enhancing the efficiency of removal, in particular towards certain molecules or classes of chemical compounds. This is achieved by forming a surface of the adsorbent material which is in general more "compatible" with the target molecule(s) (the solute specie (s) in adsorption), or in some cases, under particular conditions, also capable of forming preferential chemical bonds, of various nature and stability, with the target molecule(s). Chemical reactions between the target molecule(s) and the adsorbent material are however not standard in adsorption processes.

A peculiar technique for the chemical modification of an organic (e.g. an acrylic polymer) or inorganic adsorbent material consists in creating, on the surface and/on inside the pores of said organic or inorganic adsorbent material, so called "molecular imprints" for certain target organic molecules.

As disclosed in e.g. WO 99/65528, WO 98/56498, and in US 6,057,377, generally such imprints onto the surface or inside the pores of the organic or inorganic adsorbent material are obtained by methods of formation comprising the following steps: a) chemically reacting a target molecule to functionalized groups of suitable functionalizing monomers; b) further reacting said functionalizing monomers with the molecular structure of an organic or inorganic adsorbent material; c) breaking by suitable chemical means (e.g. by oxidation) the chemical bonds between the target molecule and the functionalized groups of the functionalizing monomers, previously reacted and chemically grafted to the molecular structure of the organic or inorganic adsorbent material; and c) finally removing the target molecule (e. g. with a solvent), therefore leaving onto the surface and/or into the pores of said organic or inorganic adsorbent material the functionalized groups, preferably into a spatially organized form which is said to help the specific recognition and adsorption of the same target molecule.

However, molecular imprinting involving chemical reactions between the organic or inorganic adsorbent material and the chemical species introduced therein, typically the functionalized monomers as explained above, is complex to achieve, involving multiple reaction steps, and also implies the use of expensive raw materials, for example, in case a silica modified with molecular imprinting according to the prior art is desired, there is a need for silicon in a reactive form, such as e.g. tetraethoxysilane (TEOS), and/or silico-organic compounds.

In our copending PCT patent application WO 99/40953 an odour controlling material is disclosed for removing or reducing odours emanating from certain gaseous or liquid compounds, which material comprises an inorganic adsorbent material modified by means of the so called "doping" technique. The "doping" consists in the inclusion in the inorganic adsorbent material of one or more chemical species, called dopant(s), during at least one step of the synthesis of the inorganic adsorbent material, or alternatively added to an already formed inorganic adsorbent material as a post-synthesis treatment, without involving chemical reactions between the dopant or dopants and the inorganic adsorbent material to be doped. According to the above application the dopant or dopants is/are selected from the gaseous or liquid compounds to be adsorbed, or from derivatives thereof, or belong to the same chemical class, or have similar functionalities. This is a doping made by molecules similar to the ones preferably targeted for adsorption ("homodoping"). Conventional adsorbent materials such as silica, activated alumina, silicates and aluminosilicates can be used and the gaseous or liquid compounds are preferably selected from fatty acids and derivatives thereof, amines and ammonia and salts thereof, aldehydes and ketones and organic heterocompounds. The odour control material is suitable for incorporation in an absorbent article such as a pantiliner or a sanitary napkin.

While the doped inorganic adsorbent materials of WO 99/40953 work well in adsorbing volatile malodorous compounds, there is still a need for further improving the performances of said doped inorganic adsorbent materials, and more in general of inorganic adsorbent materials chemically and/or morphologically modified by means of doping techniques and tailored for other uses.

According to the present invention, and in the context of inorganic adsorbent materials modified by means of doping techniques, it has been discovered how to enhance the performances of doped inorganic adsorbent materials in the adsorption of selected solute species.

According to the present invention, a method for increasing the adsorption capacity of a doped inorganic adsorbent material has been discovered, which comprises both the identification of a number of different specific features of the doped inorganic adsorbent materials, or of the method for manufacturing the doped inorganic adsorbent materials, or of combinations thereof, and also the indication of how to act on said specific features, in order to increase the adsorption performance of the doped inorganic adsorbent material.

One aspect of this method comprises choosing the type of the dopant or dopants for the doped inorganic adsorbent material of the present invention. Contrary to the teaching of our above mentioned patent application WO 99/40953, the choice of the dopant or dopants shall also include compounds in areas outside of the compounds which are the same as the selected solute species to be adsorbed, or are derivatives thereof, or belong to the same chemical class, or have similar functionalities.

According to another aspect of the method, an increased concentration of dopant or dopants to be included in the doped inorganic adsorbent material has to be chosen in order to increase the adsorption capacity of the doped inorganic adsorbent material of the present invention. By "increased", as used herein, it is meant a concentration for the dopant or dopants included in the doped inorganic adsorbent material of the present invention, which is much larger than the values indicated and preferred in our above mentioned patent application WO 99/40953.

A further aspect of the method consists in the selection of the molecular dimension for the dopant or dopants in order to increase the adsorption capacity of the doped inorganic adsorbent material of the present invention.

A still further aspect of the method involves the achievement of a doped inorganic adsorbent material having a selected predetermined pore structure by only using doping techniques.

According to the present invention, the method for increasing the adsorption capacity of a doped inorganic adsorbent material can also comprise any combination of the aspects referred to above.

It is therefore an object of the present invention to provide a method for increasing the effectiveness of inorganic adsorbent materials, modified by doping techniques, in adsorbing selected solute species, as explained above.

It is a further object of the present invention to provide doped inorganic adsorbent materials having an increased activity, namely in terms of an enhanced adsorption capacity and/or efficiency of removal towards selected solute species, comprising, but not limited to, volatile malodorous compounds, generally from a gas-phase or from a liquid-phase, in order to find utility in different fields of use, in addition to odour control. Said increased adsorption capacity and/or efficiency of removal can be either directed towards specific solute species, i.e. involving a selectivity towards typically one specific solute specie among others, or alternatively towards broader ranges of more solute species of different types.

SUMMARY OF THE INVENTION

The present invention provides a method for increasing the adsorption capacity of a doped inorganic adsorbent material for adsorbing one or more selected solute species from a gas-phase or from a liquid-phase, the doped inorganic adsorbent material being doped with one or more suitable dopants. The method consists of either:

- choosing the type of the dopant or dopants, including in areas outside of compounds which are the same as the one or more selected solute species, or are derivatives thereof, or belong to the same chemical class, or have similar functionalities, or
- choosing an increased concentration of the dopant or dopants, or
- selecting the molecular dimension of the dopant or dopants, or
- tailoring the pore structure of a doped inorganic adsorbent material through the doping of the doped inorganic adsorbent material,
- or combinations thereof.

The method provides doped inorganic adsorbent materials having an enhanced adsorption capacity towards selected solute species.

Different alternative preferred embodiments of the present invention are also disclosed, according to the attached claims, which refer to improved doped inorganic adsorbent materials formed according to the method, and which have an increased activity.

DETAILED DESCRIPTION OF THE INVENTION

1. Overall Characteristics of the Doped Inorganic Adsorbent Materials, and Method for Making the Same

According to the present invention it has been surprisingly discovered that the activity of inorganic doped adsorbent materials can be significantly improved. This is achieved by means of the method of the present invention, and according to different preferred alternative embodiments, as will be described hereinafter.

Adsorption, as known in chemistry and as intended herein, involves contacting a free fluid phase (a gas-phase or a liquid-phase) with a rigid and durable particulate phase which is constituted by natural or synthetic materials of crystalline, microcrystalline, or amorphous structure having the property of taking up and storing one or more solute species originally contained in the fluid-phase, owing to the morphology and nature of their internal pore surfaces which are accessible for selective combination of solid and solute.

In adsorption said solute species typically consist in molecules, but can also comprise in the context of the present invention more complex entities, such as for example colloidal particles, micelles, and also living organisms such as viruses and bacteria.

Adsorption involves relatively small attractive forces between the adsorbed substance (solute) and the adsorbent material, e.g. of the order of the Van der Waals forces, or generally of electrostatic interactions. More precisely, chemical reactions or chemical bonding between the substance to be adsorbed (the solute specie) and the adsorbent material, typically Si-C bonds, which involve a stoichiometric mechanism and ratio, are excluded from adsorption in the context of the present invention.

As used herein, the "activity", also referred to as "adsorption activity", of an inorganic adsorbent material, either doped or undoped, corresponds to the effectiveness in adsorbing selected solute species, and comprises the efficiency of removal and the adsorption capacity of the inorganic adsorbent material towards one or more selected solute species from a free fluid phase, namely a gas-phase or a liquid-phase. Also the selectivity of an inorganic adsorbent material, i.e. the ability of the inorganic adsorbent material to selectively adsorb one particular solute specie among other species, is an important feature of the inorganic adsorbent material of the present invention.

As intended herein, the efficiency of removal results from comparing, as percent change, the initial amount (or concentration) of a selected solute specie in the gas- or liquid-phase from which it has to be removed by the adsorbent material and its final amount (or concentration) in the same gas or liquid-phase after contact with the adsorbent material at fixed conditions.

Various specific methods can be used by the man skilled in the art in order to evaluate this efficiency of removal according to the general principle above, and can be suitably chosen or adapted depending on the conditions in which adsorption shall occur, i.e., for example, on whether the adsorption occurs from a gas- or from a liquid-phase, and also on the nature of the liquid-phase, namely an aqueous or non-aqueous liquid. An exemplary method is the Efficiency of Removal Test Method described herein.

As intended herein, by "adsorption capacity" of an inorganic adsorbent material, it is meant the actual amount of a selected solute specie adsorbed by the inorganic adsorbent material at fixed conditions (typically at saturation). According to the present invention, the adsorption capacity is evaluated according to the Adsorption Capacity Test Method described herein.

According to the above methods, both the adsorption capacity and the efficiency of removal of a given doped inorganic adsorbent material are generally evaluated both as absolute values, and in comparison to a respective undoped reference inorganic adsorbent material, also referred to as "undoped reference material".

As a general rule, in order to make a meaningful comparison in general between two inorganic adsorbent materials and in particular between a doped inorganic adsorbent material and the respective "undoped reference inorganic adsorbent material", the selected parameter of each material (namely the efficiency of removal or the adsorption capacity) must be evaluated with the same test method, and under the same conditions.

As used herein, by "undoped reference material" it is meant an inorganic adsorbent material synthesized from the same raw materials, and according to the same process conditions, as the doped inorganic adsorbent material under consideration, apart from the inclusion of any dopant or doping.

As used herein, by the term "doping" it is meant the inclusion in the inorganic adsorbent material or, in more general terms, the presence, in suitable concentration and form, during at least one step of the synthesis of said inorganic adsorbent material, of one or more chemical species, called dopant(s), which are chemically different from the inorganic adsorbent material and from the raw material(s) from which said adsorbent material is formed, in order to obtain a "doped" inorganic adsorbent material. According to the present invention, "doping" is to be meant as excluding chemical reactions between the dopant or dopants and the inorganic adsorbent material to be doped, or the raw materials from which the inorganic adsorbent material is formed. When not present in one step of the synthesis process of the inorganic adsorbent material, said dopant or dopants may be introduced into said inorganic adsorbent material afterwards by a post-synthesis treatment. The dopant or dopants may be left inside the finished, doped inorganic adsorbent material or alternatively can be partially or totally removed by any suitable removal methods such as e.g. volatilization, pyrolysis, washing, or extraction with a suitable solvent. Therefore, according to the present invention, by "doped inorganic adsorbent material" it is meant an inorganic adsorbent material which, through the doping technique as defined above, i.e. through the presence, at least in one step of the synthesis process or of a post-synthesis treatment, of a dopant or of dopants, has been modified in its chemical and/or physical-chemical and/or morphological characteristics, independently from the fact that the dopant or the dopants are still present in the finished doped inorganic adsorbent material or not.

The amount of the dopant or dopants in the doped inorganic adsorbent material of the present invention is expressed as concentration of the dopant itself (in ppm or weight percent) calculated with respect to the dry final product (the inorganic adsorbent material), and in the case of the preferred inorganic adsorbent materials comprising silica's and silicates, typically corresponds to the percentage calculated on the theoretical content of silicon dioxide $SiO_2$ in the synthesis solution.

Doped inorganic adsorbent materials according to the present invention both include inorganic adsorbent materials doped with selected amounts of dopants, which in turn are selected from those compounds which have to be adsorbed, or derivatives thereof, or compounds of the same chemical class, or having similar functionalities, in what will be called hereinafter "homodoping" or imprint doping, and inorganic adsorbent materials doped with dopants selected from compounds which are instead different from the compounds to be adsorbed. The latter will be referred to hereinafter as "heterodoping".

Doped inorganic adsorbent materials according to the present invention will be herein described mainly with reference to materials for the adsorption of volatile malodorous compounds from a liquid-phase. However, the present invention broadly encompasses doped inorganic adsorbent materials which are capable of adsorbing solute species selected from a broad range, comprising, but not limited to, volatile malodorous compounds, from a free flowing phase, namely a gas-phase or a liquid-phase, and having an increased adsorption activity.

Particularly, the doped inorganic adsorbent materials made in accordance to the present invention can find use in a number of fields where adsorption of selected solute species from a gas- or a liquid-phase is useful and desirable. By way of example, possible alternative uses are listed in the non limiting list below.

The doped inorganic adsorbent materials of the present invention can be used in industrial adsorption processes from gas- and liquid-phase comprising processes of separation, extraction, and purification, such as dehydration of gases; toxic gas removal in ventilating systems or from vent gases for air-pollution control; separation of rare gases; decolorization, drying, or degumming of petroleum fractions, and more generally industrial oil refining; purification of process effluents for control of water pollution; catalyst or catalyst support, odour, taste, and colour removal from municipal water supplies; purification of water and of other fluids; separation of natural mixtures of substances; use as additive for paper e.g. for enhancing ink absorption; use as mineral filler for e.g. thermoplastic compositions; etc.

Alternative uses comprise treatment of foodstuff and beverages, such as drinking water purification; edible animal and vegetal oils or fats refining/treatment, e.g. decolorization, or production of cholesterol-free oils/fats, or regeneration of used oils/fats; de-caffeination of coffee; clarification of beverages, e.g. haziness control of beer, wine, and fruit juices; etc. and also treatment of pharmaceuticals, such as purification or clarification of pharmaceutical preparations; recovery of vitamins and of other products from fermentation mixtures; etc.

Further alternative uses comprise delivery of actives, i.e. adsorption and subsequent release of substances capable of providing an action, such as perfumes, aromas, flavours, medicaments; and related uses in various articles or products, such as for example in toothpastes, chewing gums, etc.

Alternative uses comprise treatment and purification of biological fluids, both in vitro and in vivo, such as in dialysis, hemoperfusion, internal anti-intoxication and anti-fermentation treatments; immobilization of micro-organisms such as viruses and bacteria; blocking of endotoxins or allergens; etc.

The doped inorganic adsorbent materials of the present invention can be also used in consumer goods in order to provide benefits related to their specific adsorption activity, such as for example in filters for smoking articles, e.g. cigarettes, for blocking nicotine and char; in laundry articles, e.g. detergents, for selective dye transfer control in washing; etc.

A further alternative field of use comprises odour control in order to avoid or minimize detection of odours emanating from animate and inanimate sources, such as for example in ventilation systems, room and car fresheners, animal litters, in personal care and hygienic articles, in toothpastes or chewing gums for breath control, etc. Use as an odour control material can of course encompass many of the other possible fields mentioned above.

The doped inorganic adsorbent material according to the present invention typically comprise inorganic materials such as for example activated alumina; siliceous adsorbents comprising natural and synthetic aluminosilicates such as zeolites, e.g. zeolite A; active silica's, silica gel, silicates. Particularly preferred materials are active silica's.

With particular reference to the adsorption of volatile malodorous compounds, which is illustrated in some of the examples, and which constitutes a specific, but not limiting field of application of the present invention, said volatile malodorous compounds broadly belong to different classes of compounds: fatty acids and derivatives thereof; ammonia and amines and their salts; alcohols, aldehydes and ketones; organic heterocompounds, etc.

The fatty acids are volatile fatty acids selected from straight chain and branched chain fatty acids containing, for example, from 1 to 12 carbon atoms, for example isovaleric acid. Another class of odorous compounds include ammonia and ammonium salts and amines having a boiling point of up to $170°C$ at atmospheric pressure and salts thereof, e.g. triethylamine.

A further class of odorous compounds comprises alcohols, aldehydes such as furaldehyde, and ketones having a boiling point of up to $170°C$ at atmospheric pressure.

Another class of odorous materials include organic heterocompounds containing at least one nitrogen, sulfur or oxygen atom, preferably heterocyclic compounds containing one or two cyclic rings and containing one or two heteroatoms which may be the same or different. Other compounds in this category include mercapto- and thio-compounds and other compounds containing at least one sulphur atom per molecule which have a boiling point up to $170°C$ at atmospheric pressure.

In general, but also with particular reference to the field of odour control, when the adsorption occurs in a liquid-phase constituted by an aqueous liquid, the doped inorganic adsorbent material is used at a preferred pH level which can be adjusted according to the polar character of the substance to be adsorbed, e.g. a malodorous substance. It is known that a strongly acid or a strongly basic inorganic adsorbent material, e.g. active silica, can be prepared to show an increased adsorbing power respectively with regard to basic and acid substances. However, this apparently higher adsorption is not a true adsorbent capability but is based on a chemical reaction so that the effect is transitory i.e. it is maintained only until the excess acidity or basicity, available for reaction, has been neutralized.

For example, when a doped inorganic adsorbent material according to the present invention is used as an odour controlling material for feminine hygiene, for example incorporated in a pantiliner or a sanitary napkin, it is preferred to provide the material with a neutral pH because malodorous compounds present in physiological fluids may be acidic, basic or neutral.

When used in other absorbent articles where the malodours have a defined and constant character, e.g. ammonia and amines originating from urine, the pH can be adjusted, in this case to an acidic pH to provide supplementary odour control to that provided by the doping impurities and/or by the morphological and/or chemical modifications introduced by the doping technique.

The doped inorganic adsorbent material can be prepared by any convenient known method. In particular doped inorganic adsorbent materials comprising silica, silicagel or active silica can be synthesized via gellation by acidification of a water solution of soluble alkaline silicates, or precipitation of colloidal silica, or also by controlled hydrolysis of silico-organic compounds, e.g. tetraethoxysilane, wherein the selected dopant or dopants are suitably introduced in the reaction solution at least during one step of the synthesis process or are added to an already formed inorganic adsorbent material during a post-synthesis treatment. Preferred doped inorganic adsorbent materials according to the present invention comprise inorganic adsorbent materials having a prevailing amorphous structure, and more in particular inorganic adsorbent materials essentially composed by amorphous silicon dioxide.

According to the preferred embodiment of the present invention, it has been discovered a method for increasing the adsorption capacity of a material for adsorbing one or more selected solute species, which material comprises an inorganic adsorbent material doped with one or more dopants, i.e. an inorganic adsorbent material modified by means of doping as defined herein. The method of the present invention for increasing the adsorption capacity of doped inorganic adsorbent materials consists in the identification of a number of relevant features of the doped inorganic adsorbent material, and of a method for manufacturing the doped inorganic adsorbent material, and in the indication on how to act on them in order to increase the adsorption capacity of the doped inorganic adsorbent material. These features are the type, the concentration, and the molecular dimension of the dopant or dopants, the latter being relevant either as such, or in the context of a method for manufacturing the doped inorganic adsorbent material of the present invention. According to the present invention, the method consists in any of the following options, or in combinations thereof.

According to a first option, the method consists in choosing the type of the dopant or dopants. Surprisingly, it has been discovered that this choice also includes compounds in areas outside of compounds which are the same as the one or more selected solute species to be adsorbed, or are derivatives thereof, or belong to the same chemical class, or have similar functionalities.

According to a second option, the method consists in choosing an increased concentration of the dopant or dopants to be included in the doped inorganic adsorbent material of the present invention, wherein "increased" is to be meant as explained in the Background of the Invention. Unexpectedly, the inventive choice of these increased concentrations of the dopant or dopants has proved to be effective in increasing the adsorption capacity of a doped inorganic adsorbent material.

The third option of the method consists in selecting the molecular dimension of the dopant or dopants of the doped inorganic adsorbent material.

The fourth option of the method of the present invention intended to increase the adsorption capacity of a doped inorganic adsorbent material consists in tailoring the pore structure of a doped inorganic adsorbent material through suitably doping the material.

Preferably, the method of the present invention is such that a doped inorganic adsorbent material made according to the method has an adsorption capacity which is at least 8 mg/g, preferably at least 10 mg/g, more preferably at least 12 mg/g, greater than the adsorption capacity of the corresponding undoped reference inorganic adsorbent material, or alternatively is at least 30%, preferably at least 35%, more preferably at least 40%, greater than the adsorption capacity of the corresponding undoped reference inorganic adsorbent material. The adsorption capacity of both the doped inorganic adsorbent material made according to the method of the present invention, and the undoped reference material are to be measured according to the Adsorption Capacity Test Method described in Chapter 7 herein.

Further preferred alternative embodiments of the present invention, corresponding to doped inorganic adsorbent materials made according to the method of the present invention, will be hereinafter described. All of them are in the context of a general improvement of the known doping technique, intended in its broader meaning of chemical and/or physical-chemical and/or morphological modification of the surface of inorganic adsorbent materials through the presence, at least in one step of the synthesis process or as a post-synthesis treatment of said inorganic adsorbent material, of a dopant or of dopants, which is/are species chemically different from the inorganic adsorbent material and from the raw material(s) from which said adsorbent is generated, and wherein the doping excludes chemical reactions between the dopant or dopants and the inorganic adsorbent material to be doped, or the raw materials from which the inorganic adsorbent material is formed, as explained above with reference to the definition of "doping". All alternative embodiments of the present invention lead to doped inorganic adsorbent materials having an increased activity, corresponding to an increased efficiency of removal and/or adsorption capacity towards one or more selected solute species from a gas- or a liquid-phase. This increased activity can be either directed towards specific solute species, typically selectively towards one specific solute specie among other species, or alternatively towards broader ranges of more solute species of different types. In the first case a doped inorganic adsorbent material according to the present invention can therefore also show an increased selectivity, i.e. the capacity of selectively adsorbing e.g. one specific solute specie among other species.

Particularly, alternative embodiments of the present invention comprise the application of various doping techniques such as:

- choice of an increased concentration of dopant or dopants
- selection of the molecular dimension of the dopant or dopants
- doping with metals in finely divided form (preferably colloidal metals)
- doping with organo-metallic compounds and complexes
- doping with precipitation salts
- pore structuring by doping

either applied singularly, or in combinations, as will be explained in details below. The doping techniques listed above are in the context of either homodoping (imprinting doping), or heterodoping, as explained above.

2. Doped Inorganic Adsorbent Materials with Selected Concentration/Molecular Dimension of the Dopant(s)

According to an alternative preferred embodiment of the present invention, it has been surprisingly discovered that by choosing increased concentrations of dopant or dopants to be included in the doped inorganic adsorbent material of the present invention, a material with an increased adsorption activity/efficiency of removal is obtained. Particularly, the dopant, or at least one of the dopants, must have a concentration of more than 1,000 ppm, preferably of more than 2,000 ppm, more preferably of more than 5,000 ppm. As explained above, the dopant is not necessarily actually present in the final product. It has been discovered that these high amounts lead to doped inorganic adsorbent materials showing an increased efficiency of removal, specifically in the context of the "homodoping", as explained above, i.e., towards solute species/compounds to be adsorbed which are the same as the respective dopant, or derivatives thereof, or of the same chemical class, or having similar functionalities.

Alternatively, or preferably in combination with the chosen increased concentration of the dopant or dopants as explained above, according to a further preferred embodiment of the present invention, the molecular dimension of the dopant, or of at least of one of the dopants can be preferably selected. By "molecular dimension" it has to be meant in the context of the present invention the largest or major dimension of the molecule, or of the aggregate of molecules, of a dopant in the conditions of synthesis of the doped inorganic adsorbent material. On one hand in fact, as it is known in chemistry, certain molecules have different dimensions depending on whether they are in solution or not, on the concentration of the solution, on the nature of the solvent and on many other physico-chemical parameters such as the pH, the temperature etc. For example, certain long linear molecules, such as for example surfactants or esters of fatty acids, are straightened if they are not in solution, and therefore have a certain largest dimension (substantially corresponding to their length), while if they are in water solution they tend to curl or twist, therefore having a smaller major dimension. Conversely, there are molecules which, in the synthesis conditions, for example in water solution, tend to form supra-molecular aggregates such as dimers, micelles etc. According to this preferred embodiment of the present invention, the molecular dimension, which is relevant in this selection criterion, is therefore strictly linked to the synthesis conditions, as it may vary depending on them, and is to be meant as evaluated at the synthesis conditions of the doped inorganic adsorbent material, or in any case at the actual conditions at which the dopant or dopants is/ are included, e.g. in case of a post-synthesis treatment as explained above.

According to this preferred embodiment of the present invention, the dopant or at least one of the dopants shall have a largest molecular dimension, as defined above, of at least 0.5 nm, preferably of at least 0.7 nm, more preferably of at least 1 nm, said dimension evaluated, with any suitable method known in the art, at the synthesis conditions of the doped inorganic adsorbent material as explained above.

The relevance of the molecular dimension of the dopant molecule in the case of homodoping can be explained, without being bound to any theory, when considered in comparison with the relevant dimension of the basic structure of the inorganic adsorbent material to be modified by addition of said dopant or dopants. Generally speaking, it is preferred that the major dimension of a dopant is greater than the relevant dimension of the basic structure of the undoped inorganic adsorbent material, such that the molecule of dopant is actually capable of modifying the surface of the inorganic adsorbent material through an "imprint" of its molecular size and shape (by chemically and/or morphologically modifying the surface of the inorganic adsorbent material). If for example the inorganic adsorbent material is a silica, as it is preferred in the present invention, the relevant dimension of the basic structure is the side length of the tetrahedron $SiO_4$, which is 0.32 nm. A dopant having a major dimension in the condition of formation as specified above, i.e. of at least 0.5 nm, preferably of at least 0.7 nm, more preferably of at least 1 nm, has proved to be particularly effective in this context, in order to provide a doped inorganic adsorbent material having an increased adsorption activity according to the present invention.

According to the present invention, the selection of the molecular dimension of the dopant or dopants is particularly effective in the context of the imprinting doping, or homodoping, wherein said imprinting doping is to be meant as explained above, preferably in combination with the choice of the increased concentration of the dopant or dopants.

3. Doped Inorganic Adsorbent Materials with Specific Classes of Dopant(s)

According to other alternative preferred embodiments of the present invention, doped inorganic adsorbent materials showing an increased adsorption activity can be prepared by suitably selecting the type of the dopant or dopants to be included in the inorganic adsorbent material.

A. Colloidal Metals

It has been surprisingly discovered that when said dopant, or at least one of the dopants, included in the doped inorganic adsorbent material of the present invention is selected among metals in a finely divided form, preferably in colloidal form, the resulting doped inorganic adsorbent material shows an increased adsorption activity according to the present invention, particularly towards volatile inorganic or organic sulfur-containing compounds. This is an example of heterodoping, according to the definition provided herein, in that the dopant or dopants are selected from compounds which are different from the compounds to be adsorbed.

Inorganic as well as organic sulfur-containing compounds present in a gas-phase, e.g. in air in concentrations of over $10^3$ ppm can be successfully removed by a number of processes. What is often difficult to deal with is the removal of organic sulfur-containing compounds (such as organic sulfides) at concentration in order of $1-10^2$ ppm,

which is one of the main problems in the field of odour control. The procedures to remove the sulfur-containing malodorous compounds are mostly of the physical nature, especially adsorption, absorption, or removal by chemical reaction. Suitable adsorbents for this purpose should have large active surface area and suitable other characteristics, such as chemical nature of the surface or pore size and pore volume.

According to this alternative preferred embodiment of the present invention, a doped inorganic adsorbent material particularly targeted to the adsorption of volatile sulfur-containing compounds can include as a dopant or dopants one or more metals in finely divided form, preferably colloidal metals selected form the group consisting of colloidal gold, silver, copper, platinum and platinum group metals, zinc, cadmium, mercury, lead, arsenic, antimony, and manganese. Colloidal gold or silver are particularly preferred.

The concentration of the colloidal metal or metals, for example gold or silver as it is preferred, to be included as a dopant or dopants in the doped inorganic adsorbent material, is preferably overall limited to a concentration of 10-1,000 ppm, preferably of 100-600 ppm. The doped inorganic adsorbent material of this preferred alternative embodiment of the present invention therefore consists in an easily obtainable and cheap material, for example a silica, modified with a very low amount of the selected dopant or dopants, leading to a doped material being highly effective in adsorption activity towards sulfur-containing compounds, with substantially no increase in the cost of the basic inorganic adsorbent material owing to the very low amount of dopant.

### B. Organo-Metallic Compounds and Complexes

According to a further alternative embodiment of the present invention, a doped inorganic adsorbent material can be prepared by doping an inorganic adsorbent material with one or more organo-metallic compounds or complexes as a dopant or dopants. Said organo-metallic compounds and complexes can for example comprise Cu-phthalocyanines, and metallocene compounds.

It has been surprisingly discovered that this particular class of dopants shows a double functionality. The metal functionality of the molecule or complex in fact provides the doped inorganic adsorbent material doped with the selected organo-metallic compound or complex with an increased adsorption activity towards volatile organic or inorganic sulfur-containing compounds, in an example of heterodoping. In this context, preferred concentrations of said selected organo-metallic compounds or complexes in the inorganic adsorbent material of this preferred embodiment of the present invention are about the same already mentioned with reference to dopants selected from metals in finely divided form, i.e. in the range of 10-1,000 ppm, preferably 100-600 ppm, said concentration to be intended with reference to the metal content, i.e. to the metal moiety of the organo-metallic compound or complex.

Conversely, the other portion of the molecule or complex of the selected organo-metallic compound or complex, other than the metal moiety, i.e. the organic moiety, can provide an inorganic adsorbent material doped with the same organo-metallic compound or complex with an increased adsorption activity towards species/compounds which are derivatives of, or are of the same chemical class of, or have similar functionality as, this organic moiety of the molecule or complex, in an example of homodoping. In this context higher concentrations of the selected organo-metallic compound(s) or complex(es) to be included in the inorganic adsorbent material as a dopant or dopantscan be also preferably selected, for example concentrations of more than 1,000 ppm, preferably of more than 2,000 ppm, more preferably of more than 5,000 ppm, said concentrations being evaluated with reference to the organic moiety of the molecule or complex of the dopant.

### C. Precipitation Salts

According to another alternative preferred embodiment of the present invention, suitable dopant or dopants to be included in a doped inorganic adsorbent material in order to obtain a doped inorganic adsorbent material having an increased adsorption activity according to the present invention can be selected among the group consisting of precipitation salts of a weak acid and of a strong base, or alternatively of precipitation salts of a strong acid and of weak base.

It has been surprisingly discovered that the inclusion in the finished inorganic adsorbent material of selected amounts of one or more precipitation salts of a weak acid and of a strong base, or vice versa of a strong acid and of a weak base, as the dopant or as at least one of the dopants in a doped inorganic adsorbent material according to the present invention, in a suitable concentration and dispersion within the pores of the inorganic adsorbent material, which is preferably a silica, provides a control of the pH level within the pores themselves. This adjustment of the pH level within the pores of the doped inorganic adsorbent material helps lower the concentration of molecules of solute species having acid or basic character from the free fluid phase, in turn providing corresponding doped inorganic adsorbent materials according to this alternative preferred embodiment of the present invention which show an increased adsorption activity towards respective acidic or basic solute species, particularly from a water solution. Without being bound to any theory, a possible explanation of this behaviour is in the following example, concerning an inorganic adsorbent material provided with an increased pH within the pores through doping with precipitation salts of a weak acid and of a strong base, showing increased adsorption activity, from a water solution (the liquid-phase), towards solute species (fatty acids) having an acidic character. The concentration of fatty acids in the gas phase over their water solutions depends on the pH of the respective solution. For example, with 2 wt. % water solution of butyric acid the decrease in pH from 7.4 to 4.0 leads to an increase in the concentration in the gas phase by 10%, while the increase in pH from 7.4 to 11.0 leads to a decrease in concentration in the gas phase by about 60%. Consequently the local increase in pH within the pores of the silica due to the presence of basic precipitation salts (i.e. coming from a weak acid and a strong base) causes a decrease in the concentration of the fatty acid in the gas phase.

Preferred concentrations of precipitation salts as disclosed above in a doped inorganic adsorbent material in order to obtain a doped inorganic adsorbent material according to this alternative preferred embodiment of the present invention are in the range of 1% to 50% by weight on the dry basis of the inorganic adsorbent material, preferably of 5% to 40%, more preferably of 8% to 35%. Most preferably, the precipitation salt or salts is/are actually present in the preferred concentrations in the final doped inorganic adsorbent material of this preferred embodiment of the present invention.

Any suitable method can be used in order to prepare a doped inorganic adsorbent material according to this alternative preferred embodiment of the present invention. When the starting inorganic adsorbent material to be doped with the inclusion of the selected dopant or dopants is preferably a silica, these precipitation salts can be introduced either by formation and co-precipitation with the silica, in the course of the gellation of the silica e.g. in the step when a water solution of a sodium silicate is treated by a suitable acid, or by post-synthesis impregnation of an already formed silica by a water solution of the suitable salt or salts.

More in detail, according to the first method a doped silica can be obtained for example by gelling a silica from a solution of sodium silicate by acetic acid (which acts both as the gelling and the doping agent) at an increased temperature till pH of the solution in the range of 5.0-8.0 is achieved, whereupon the gel formed is subjected to aging at an increased temperature and recovered by filtration. If all the formed amount of the precipitation salts is to be kept into the finished adsorbent silica, the gel is dried e.g. at 190°C without any previous washing. Otherwise the gel is washed in the conditions and with the amount of water suitable to leave inside the silica the desired concentration of the precipitation salt, e.g. according to the preferred concentrations as explained above. In the alternative method, an already formed silica is impregnated with a solution of a suitable salt (e.g. of a weak acid and a strong base) in a suitable concentration in order to have the preferred final concentration of the precipitation salt in the doped inorganic adsorbent material, and then is dried at an increased temperature (over 130°C) till the solvent is evaporated.

The solution according to this alternative preferred embodiment of the present invention is advantageous in that it either involves, according to the first general method, the application of an easily obtainable and very cheap raw material (typically, and preferably, a sodium silicate solution), which can be directly formed into a highly efficient doped inorganic adsorbent material, particularly for the removal of malodorous fatty acids, by a simple and cheap method, or, according to the second general method, the direct modification of commercial silica, whose impregnation with suitable precipitation salts provides the final material with the same increased adsorption activity.

4. Pore Structuring through Doping

According to a further alternative preferred embodiment of the present invention, the adsorption activity of a doped inorganic adsorbent material can be also enhanced towards specific solute species with the provision of an optimized pore structure in said doped inorganic adsorbent material by means of a specific doping technique.

Specific tailoring of structural parameters of an inorganic adsorbent material, e.g. an active silica, such as provision of specific surface and pore size, is obtainable with different methods taught in existing literature. The pore size, or average pore diameter, is to be intended herein in its usual meaning known in physical chemistry, and can be evaluated with any known suitable method. According to this further embodiment of the present invention, pore structuring of an inorganic adsorbent material can be achieved through a doping technique, by means of suitably selecting the conditions of doping, and the type of the dopant or dopants.

Specifically, according to this preferred embodiment of the present invention, a doped inorganic adsorbent material, e.g. a doped active silica, having a predetermined porosity structure and pores with a predetermined selected size, can be obtained by synthesizing the doped inorganic adsorbent material in the presence of a selected dopant or dopants which, in the synthesis conditions, is constituted by molecules or supra-molecular aggregates, e.g. micelles, having the relevant dimension, i.e. the largest dimension, which is about the same as the desired selected pore size in the final doped inorganic adsorbent material. According to this alternative preferred embodiment of the present invention the selected dopant or dopants provide the doped inorganic adsorbent material with the desired pore structure/size, during the formation process, and is/are then typically removed from the doped inorganic adsorbent material, which substantially does not contain any residual dopant as a finished product. A specific pore size of the doped inorganic adsorbent material, as it is known in the art, can be selected in order to optimize the adsorption of solute species, e.g. target molecules, having approximately this same size.

The synthesis of a doped inorganic adsorbent material according to this preferred embodiment of the present invention can be achieved with any known method of preparation, provided the dopant or dopants selected according to the above criterion are added in the synthesis. For example, a doped inorganic adsorbent material having an increased adsorption activity towards solute species constituted by small volatile molecules, such as light organic amines, can be provided with an optimized pore structure characterized by a large surface area and a small pore size, wherein this pore size is selected in order to approximately match the molecular dimension of said target molecule(s). According to this preferred embodiment of the present invention, this can be achieved by selecting a suitable dopant or dopants to be added to the synthesis process of the inorganic adsorbent material. The dopant or dopants, in the synthesis conditions, shall comprise molecules or supra-molecular aggregates which have the relevant, i.e., the largest dimension which is about the same as the desired pore size, as will be illustrated e.g. in the attached Example 9.

Preferably, the dopant or dopants according to this preferred embodiment of the present invention is/are added in a concentration of at least 10,000 ppm, more preferably of at least 18,000 ppm, even more preferably of at least 20,000 ppm, based on the dry amount of the final doped inorganic adsorbent material. Even higher concentrations are also possible, for example up to 50,000 ppm, and above.

This preferred embodiment of the present invention typically constitutes an example of heterodoping, according to the definition provided herein, in that the dopant or dopants are selected on the basis of their molecular dimension at the synthesis conditions, independently from the nature of the solute species to be adsorbed, and therefore can be typically different from them.

5. Combinations

According to the present invention, any possible combinations of the alternative preferred embodiments described above are also possible, and are considered within the scope of the present invention. Possible examples are inorganic adsorbent materials comprising at least two different dopants selected from the different types described under Chapter 3 above. Any combinations with the pore structuring technique described in Chapter 4 above, as well as with selected concentrations and/or molecular dimensions of the dopant or dopants described in Chapter 2 are also possible, and within the scope of the present invention.

For example, according to a preferred embodiment of the present invention, a doped inorganic adsorbent material can be doped with one or more metals in finely divided form, preferably colloidal metals, as disclosed under 3.A above, in combination with one or more precipitation salts as disclosed under 3.B above. Respective preferred concentrations and features are the same as described in the relevant paragraphs. Such a doped inorganic adsorbent material shows an increased adsorption activity towards different classes of solute species, namely organic fatty acids, sulfur-containing compounds, and organic amines.

6. Other Preferred Features of the Doped Inorganic Adsorbent Materials

In addition to the above features in the context of the doping techniques, according to the various alternative preferred embodiments of the present invention, different optional features known in the art can be further included in the doped inorganic adsorbent materials according to the present invention, in order to further morphologically and/or chemically modify the surface of the doped inorganic adsorbent material itself, such as for example, but without limitation:

- pore, i.e. pore size, pore shape, and pore volume, and other surface morphology parameters engineering, achieved by means of known techniques different from doping;

- chemical hydrophobization of the surface of the doped inorganic adsorbent material, particularly for the adsorption of hydrophobic organic molecules from water, achieved by known techniques, e.g. by chemical grafting of organic groups on the surface of the inorganic adsorbent material;

- change of the iso-electric point of the doped inorganic adsorbent material in water, such as for example the increase of the iso-electric point of a doped active silica from pH=2.9, which is the pH typical of a silica, to higher values, in order to not impair the adsorption from water of molecules (solute species) which are negatively charged.

7. Test Methods

Adsorption Capacity Test Method.

The Adsorption Capacity Test Method is intended to measure the actual amount of a selected solute specie adsorbed by an inorganic adsorbent material, in mg/g, at fixed conditions of quasi-saturation. By quasi-saturation it is meant herein a condition in which the inorganic adsorbent material is put in contact with an amount of solute specie sufficient to exhaust its adsorbent capacity, in a period of time, which is representative of the actual adsorption conditions which are encountered in common practice, as specified below. The respective amounts adsorbed by a doped inorganic adsorbent material, and by its corresponding undoped reference material, constituted, as explained above, by a similar material, obtained in the same synthesis conditions, but without any doping and dopant, are evaluated and compared.

In order to verify the adsorption capacity of a doped inorganic adsorbent material, a selected solute specie is to be tested according to the method.

The test is conducted at constant temperature of 25°C

Adsorption in liquid-phase.

A 5% by weight solution is prepared dissolving the selected solute specie in a respective solvent. 0.5 g of the inorganic adsorbent material under test are mixed with 0.5 ml of solution and put in a closed vessel, where contact is maintained for 15 minutes. Thereafter, the residual amount of the solute specie in the solution, and if necessary in the gas in equilibrium with the solution, is measured by means of known methods, for example by gas or liquid chromatography. By difference, the amount actually adsorbed by the inorganic adsorbent material is evaluated in mg/g.

For a selected solute specie the test is to be repeated in liquid-phase with the following solvents: water at three different pH levels, namely 2±0.5, 7±0.5, and 9.5±0.5, ethanol, hexane, toluene, methylene chloride, and also in gas-phase as explained below, if the solute specie is volatile. As intended herein, by "volatile" it is meant a solute specie having a boiling point of up to 170°C at atmospheric pressure.

The test is performed both on the doped inorganic adsorbent material under test, and on the undoped reference material for comparison.

Of course, depending on the selected solute specie, one or more of the indicated solvents can be excluded, for example because the selected solute specie is not soluble in the required concentration in a solvent, or also if a solvent actually corresponds to a selected solute specie. This can be readily ascertained by the man skilled in the art in performing the method.

The results obtained with the different solvents, and, if applicable, also obtained from the adsorption in gas-phase (see below), are to be compared, and the result showing the largest difference with the undoped reference material has to be taken as the value of the adsorption capacity of the doped inorganic adsorbent material under test towards the selected solute specie.

Adsorption in gas-phase.

A 5% in volume mixture of the gaseous solute specie in air at ambient conditions (temperature of 25°C, atmospheric pressure, and relative humidity of 50% is kept in a closed vessel having a volume of about 200 ml. 0.5 g of the inorganic adsorbent material under test are put in the vessel and contact with the gas-phase is kept for 15 minutes. Afterwards, the residual content of the solute specie in air is evaluated with known means, e.g. by gas chromatography, and by difference the amount of solute specie actually adsorbed in the inorganic adsorbent material is evaluated in mg/g.

If the residual amount of solute specie in the fluid-phase (either in the gas- or in the liquid-phase, as the case will be), is substantially zero after a contact of 15 minutes between the fluid phase and the inorganic adsorbent material under test, this can imply that the quasi-saturation conditions between the inorganic adsorbent material and the solute specie have not been attained, and that possibly the inorganic adsorbent material has adsorbed the entirety of the solute specie from the fluid-phase without exhausting its adsorption capacity. In such a case the test is repeated with the same, "partially exhausted", inorganic adsorbent material until a residual amount of solute specie in the fluid phase is detected and measured with the selected known means, in order to evaluate the overall amount of solute specie adsorbed by the inorganic adsorbent material at quasi-saturation conditions. In the adsorption in liquid-phase, this is done by suitably adding further 0.5 ml of the same solution to the inorganic adsorbent material in the vessel. In the adsorption in gas-phase, a further suitable amount of the same gaseous solute specie is added in order to achieve the same 5% volume concentration in the solute specie/air mixture.

Preferably, a doped inorganic adsorbent material according to the present invention has to show an adsorption capacity, towards at least one of the selected solute species, which is at least 8 mg/g, preferably at least 10 mg/g, more preferably of at lest 12 mg/g greater than the adsorption capacity of the undoped reference inorganic adsorbent material. Alternatively, in relative terms, the adsorption capacity of a doped inorganic adsorbent material according to the present invention has to be at least 30%, preferably at least 35%, more preferably ate least 40% greater than the adsorption capacity of the undoped reference inorganic adsorbent material.

Efficiency of Removal Test Method.

The Efficiency or Removal Test Method is intended to measure the activity of the doped inorganic adsorbent materials of the present invention in terms of efficiency of removal towards specific solute species, as illustrated in the following examples.

0.5 g of the tested inorganic adsorbent material and 0.5 g of a solution containing the specific solute specie are mixed in a china crucible and stirred for one minute.

Four solutions are prepared by dissolving in distilled water the following amounts of solute species, according to the type of solute specie tested:

- 2% by weight of Butyric acid
- 5% by weight of Tri-methyl amine
- 2% by weight of Di-methyl sulfide
- 5% by weight of Pyridine

all available from Sigma Aldrich.

Each solution is buffered at pH 7.4 with Phosphate Buffer Saline available from Sigma Aldrich.

The crucible is put on the bottom of a glass vessel of total volume of about 300 cm$^3$, which is immediately closed.

The glass vessel has on its cover one inlet and one outlet. Through the inlet a glass pipe enters into the vessels arriving at about 10 mm over the center of the surface of the tested blend of inorganic adsorbent material and solution, inside the china crucible.

Nitrogen is flowing through this descending pipe at a suitable flow suitably chosen between 20 ml/min and 50 ml/min in order to have a completion time for the test between 10 and 20 minutes (see below). Once selected according to the above criterion, the flow of nitrogen is then kept constant for the entire test.

The gas escaping from the vessel through the outlet is passed through a Draeger tube, available from Draegerwerk Aktiengesellschaft (Germany), used to adsorb and measure specific impurities contained as mixed gases or vapours in a main gas stream.

The vessel is put into a thermostatic bath at 25°C at least 10 minutes before starting the test and kept there for the duration of the entire test, in order to perform the test at constant temperature.

The following tubes are used for the different solute speciess:

- Butyric Acid = Draeger tube for Acetic Acid - 5-80 ppm scale (Code 6722101)
- Tri-methyl-amine and Pyridine = Draeger tube for Ammonia - 5-70 ppm (Code CH 20501)
- Di-methyl-sulfide = Draeger tube for Di-methyl sulfide 1-15 ppm (Code 6728451)

The test is completed when the color change of the Draeger tube reaches the maximum of the scale. As mentioned above, the actual flow of Nitrogen used in the test is preferably chosen, between 20 and 50 ml/min, in order to make this happen in a time comprised between 10 and 20 minutes. If the time for the test completion, even by varying the flow of Nitrogen within the entire range, is shorter than 1 minute or longer than 30 minutes, the use of Draeger tubes with different scales is advisable.

If the detected concentration of solute specie is anyhow so low that the change of color of the Draeger tube is not complete even after 60 minutes, at that point the test is considered in any case as completed.

In parallel a similar test is conducted, the only difference being that the china crucible contains 0.5 g of the solution only, without any inorganic adsorbent material, in order to measure the concentration of the solute specie in the gas over its water solution. This value is considered to correspond to the initial concentration of the solute specie, before any adsorption by the inorganic adsorbent material occurs.

The efficiency of removal of the inorganic adsorbent material under test is calculated as:

$$\text{Eff. } \% = 100 * (C_{P0} - C_P)/C_{P0}$$

wherein:

$C_{P0}$ = Concentration of the solute specie over its water solution in the experiment without inorganic adsorbent material

$C_P$ = Concentration of the solute specie over its water solution in the experiment with inorganic adsorbent material.

Both concentrations are calculated according to the following formula:

$$C = N * 100 * CDF / (F * T)$$

Wherein:

N = parameter given in the instructions of the specific Draeger tube used ("number of strokes")
CDF = actual reading, read on the Draeger tube, at the end of the test (ppm)
F = flow of nitrogen during the test (ml/min)
T = actual test time in minutes.

8. Examples

The invention is illustrated by reference to the following Examples. The efficiency of removal values, and the adsorption capacity values mentioned in the Examples were evaluated according to the Adsorption Test Method and to the Adsorption Capacity Test Method, respectively, both methods described herein.

Example 1.

A doped active silica (Silica 11) was prepared by the gellation at 80°C of a solution of sodium metasilicate (15 g of $Na_2SiO_3$ dissolved in 700 ml of water) by a 16.3 wt. % solution of sulfuric acid to pH 7.2, and the gel was formed in the presence of 1,400 ppm of butyric acid. Finally the gel was dried at 190°C for 10 hours. Silica 11 was tested for the efficiency of removal towards butyric acid, and the result was an efficiency of 93.0%, compared to an efficiency of removal of 70% of the reference silica prepared according to the same conditions, but without the dopant (the undoped reference material). The adsorption capacity of Silica 11 was 19 mg/g, while the adsorption capacity of the reference was 14 mg/g, with an increase of about 35.7%.

Example 2.

A doped active silica (Silica 38) was prepared by the gellation at 80°C of a diluted solution of sodium silicate solution (20 ml of sodium silicate solution, available form Aldrich, in 680 ml of water) by a 29 wt. % solution of acetic acid to pH 7.1, and the gel was formed in the presence of 2,330 ppm of trimethylamine. Finally the gel was dried at 190°C for 24 hours. The results for the efficiency of removal and the adsorption capacity towards trimethylamine were 95% and 50 mg/g, compared to 81% and 40 mg/g for the undoped reference, with an increase in the adsorption capacity of 10 mg/g.
Both Example 1 and 2 show the increased performances of the doped inorganic adsorbent materials of the present invention, in the context of the improved imprinting doping or homodoping by means of chosen preferred increased concentrations of the dopant.

Example 3.

A doped active silica (Silica G6) was prepared as follows. 30 ml of a solution of sodium silicate (density of 1.39 g/cm$^3$, the $SiO_2/Na_2O$ ratio of 3.35, the concentration of $Na_2O$ and $SiO_2$ of 8.75 and 27.55 wt. %, respectively) was mixed with 670 ml of distilled water and the solution obtained was heated under constant stirring to 80°C. Then 5.7 ml of a solution of colloidal gold, which contained $3.2 \times 10^{-7}$ gram-atom of gold in 1 ml (preparation of the solution according to G. Brauer: Handbuch der Präparativen Anorganischen Chemie, F. Enke Verlag Stuttgart, 1954) was added under constant stirring, whereupon the gellation was started by the addition of a solution of 29 wt. % acetic acid. After reaching pH 7, the reaction mixture was heated at 80°C for 30 minutes. After having been aged for 30 minutes, the palely pink gel of silicic acid was recovered by sucking away the surplus liquid and washed once with 700 ml of distilled water. Finally the gel was dried at 190°C for 10 hours. The concentration of colloidal gold in silica prepared according to the foregoing procedure attained 36 ppm.

The efficiency of removal of the Silica G6 doped with colloidal gold towards dimethylsulfide is 66.9%, compared to 37.7% of the corresponding reference undoped silica, with an increase of 77.4%.

Example 4.

A doped active silica (Silica G8) was prepared according to the same method as explained in Example 3, except that 92 ml of the same solution of colloidal gold were added, and that the gel was finally dried at 190°C for 22 hours. The concentration of colloidal gold in Silica G8 was 581 ppm.

The efficiency of removal of Silica G8 towards dimethylsulfide is 93.5%, which compared to 37.7% of the same undoped silica taken as a reference in Example 3, showing an increase of 148.0%. The two examples above show the effect of the doping with colloidal metals in enhancing the adsorption activity of doped silica's towards sulfur containing compounds. Namely Example 4 shows the even better increase due to the higher preferred concentration of dopant.

Example 5.

A doped silica (Silica 16) was prepared by the gellation at 80°C of a dilute solution of Water Glass Silchem (30 ml of Water Glass Silchem in 670 ml of water) by a 29 wt. % solution of acetic acid to pH 6.9 in the presence of 2,010 ppm of Cu-phthalocyanine. The gel was dried at 140°C for 24 hours. Silica 16 showed an efficiency of removal towards dimethylsulfide of 82%, compared to an efficiency of 40% of the reference undoped silica, with an increase of 105%. This result shows the beneficial effect of the metal moiety of the organo-metallic compound with respect to the activity towards sulfur containing compounds.

The Silica 16 was also tested towards pyridine, showing an efficiency of removal of 69%, compared to the value of 17% of the undoped reference. This further result demonstrates the effect of the organic moiety of the dopant molecule with respect to the efficiency of removal towards pyridine, in the context of homodoping.

Example 6.

A doped active silica (Silica 42) was prepared as follows. 60 ml of a solution of sodium silicate (density of 1.39 g/cm$^3$, the SiO$_2$/Na$_2$O ratio of 3.35, the concentration of Na$_2$O and SiO$_2$ of 8.75 and 27.55 wt. %, respectively) was mixed with 1,340 ml of distilled water and the solution obtained was heated under constant stirring to 80°C. Then the gellation was started by the addition of a 29 wt. % solution of acetic acid acting both as a gelling agent and as a dopant to provide the precipitation salt (sodium acetate). After reaching pH 7, the reaction mixture was heated at 80°C for 30 minutes. After 30 minutes of aging the gel formed recovered by sucking away the surplus liquid and dried at 190°C for 12 hours. The residual content of precipitation salt was 25% by weight of sodium acetate.

The efficiency of removal of Silica 42 was tested towards butyric acid, with a result of 98.8%.

Example 7.

As an alternative to the preparation of a silica doped with precipitation salts directly during the formation process, e.g. by gellation from a solution of sodium silicate with acetic acid as described in Example 6, three samples of doped silica's were prepared via a post-synthesis impregnation by a water solution of a suitable salt of an already formed silica.

Commercial samples of silica A and B available from Merck and Grace under the trade names Kieselgel 40 and Silicagel 123, respectively, and a sample of silica C prepared by the gellation with acetic acid at the same conditions of Example 6, but afterwards thoroughly washed three times with 1,300 ml of distilled water, were impregnated with a solution of sodium acetate, whose concentration was 11.6 wt. %. The efficiency of removal towards butyric acid of the doped samples and of the respective reference undoped silica's are given in the following table, which shows the dramatic increase provided by the doping with precipitation salts.

|  | Content of sodium acetate (wt. %) | Efficiency of removal (%) | Efficiency increase Vs. reference (%) |
|---|---|---|---|
| A | - | 23.3 | - |
| B | - | 14.0 | - |
| C | - | 47.5 | - |

(continued)

|  | Content of sodium acetate (wt. %) | Efficiency of removal (%) | Efficiency increase Vs. reference (%) |
|---|---|---|---|
| Doped A | 9.8 | 97.9 | 320.2 |
| Doped B | 9.8 | 95.6 | 582.9 |
| Doped C | 9.8 | 99.2 | 108.8 |

Example 8.

A doped active silica (Silica Univ 1) was prepared as follows. 60 ml of a solution of sodium silicate (density of 1.39 g/cm$^3$, the SiO$_2$/Na$_2$O ratio of 3.35, the concentration of Na$_2$O and SiO$_2$ of 8.75 and 27.55 wt. %, respectively) was mixed with 1,340 ml of distilled water and the solution obtained was heated under constant stirring to 80°C. Then 110 ml of a water solution of colloidal gold was added at vigorous stirring, which contained 66 $\mu$g of Au in 1 ml, i.e. 3.3 x 10$^{-7}$ gram atom of Au/1 ml. The preparation of the colloidal solution is described in G. Brauer: Handbuch der Präparativen Anorganischen Chemie, F. Enke Verlag, Stuttgart 1954. Immediately afterwards the gellation was started by the addition of a 29 wt. % solution of acetic acid. After reaching pH 7.1, the reaction mixture was heated at 80°C for 30 minutes. After 30 minutes of aging the gel formed was recovered by sucking away the surplus liquid, washed with 1,300 ml of distilled water, sucked away and dried at 190°C for 11 hours. The content of colloidal gold in the silica prepared according to the described procedure was 346 ppm.
The efficiency of removal of the above silica was tested towards butyric acid, trimethylamine, and dimethylsulfide, giving the results of 97.3%, 93.6%, and 96.7%, respectively. The example shows a silica doped with both a colloidal metal (colloidal gold), and a precipitation salt (sodium acetate, provided by the acetic acid acting both as a gelling agent and a dopant). The combination of different types of dopants in the same silica provides an enhanced efficiency of removal towards a broad range of solute species.

Example 9.

This is an example of a silica (Silica T7) modified by means of pore structuring through doping. A mesoporous silica was prepared from 60 ml of a sodium silicate solution (density of 1.39 g/cm$^3$, the SiO$_2$/Na$_2$O ratio of 3.35, the concentration of Na$_2$O and SiO$_2$ of 8.75 and 27.55 wt. %, respectively), which was mixed with 1,340 ml of distilled water and the solution obtained was heated to 80°C under constant stirring. The gellation was started by the addition of a 29 wt. % water solution of acetic acid, after addition of 23,350 ppm of butyric acid as the dopant to create suitable pore dimensions. After reaching pH 7.03, the gellation was finished. The reaction mixture was heated at 80°C for 30 minutes. The gel formed was recovered by sucking away the surplus liquid, washed with 3,900 ml of distilled water (stirring with 1,300 ml of water for 10 minutes followed with filtration was repeated three times), sucked away and dried at 190°C for 22 hours. Its surface area, pore volume and mean pore size were 590 m$^2$/g, 0.52 cm$^3$/g and 4.1 nm, respectively.
The efficiency of removal of the silica towards trimethylamine was evaluated, showing a value of 100%. The same silica was also tested for efficiency of removal towards butyric acid and dimethylsulfide, showing values of 32% and 20%, respectively. These results also indicate a high selectivity of the doped silica under test towards trimethylamine, demonstrated by the comparison with the lower values of efficiency of removal attained for the two other solute species.

Example 10.

This is a further example of a silica (Silica 29) modified by pore structuring through doping. A silica was prepared from 60 ml of a sodium metasilicate solution, which was mixed with 1,340 ml of distilled water and the solution obtained was heated to 80°C under constant stirring. The gellation was started by the addition of a 29 wt. % water solution of acetic acid, after addition of 10,370 ppm of hexadecylmercaptane as the dopant to create suitable pore dimensions. After reaching pH 7.03, the gellation was finished. The reaction mixture was heated at 80°C for 30 minutes. The gel formed was recovered by sucking away the surplus liquid, washed with 3,900 ml of distilled water (stirring with 1,300 ml of water for 10 minutes followed with filtration was repeated three times), sucked away and dried at 190°C for 24 hours. Its surface area and mean pore size were 190 m$^2$/g, and 8.5 nm, respectively.
The efficiency of removal of the silica towards butyric acid was evaluated, showing a value of 100%. The same silica was also tested for efficiency of removal towards trimethylamine and dimethylsulfide, showing values of 57% and 47%, respectively. Also a good selectivity of the doped silica towards butyric acid, from a comparison with the efficiency of removal towards trimethylamine and dimethylsulfide, is also evident.

Examples 9 and 10 show that by suitably selecting the type and the amount of the dopant, in order to achieve the preferred pore structuring, a doped silica is obtained which is very efficient towards a specific solute specie, in terms of efficiency of removal, and also shows a good selectivity.

**Claims**

1. A method for increasing the adsorption capacity of a doped inorganic adsorbent material for adsorbing one or more selected solute species from a gas-phase or from a liquid-phase, said doped inorganic adsorbent material being doped with one or more suitable dopants, said method consisting of either:

   • choosing the type of said dopant or dopants, including in areas outside of compounds which are the same as said one or more selected solute species, or are derivatives thereof, or belong to the same chemical class, or have similar functionalities, or
   • choosing an increased concentration of said dopant or dopants, or
   • selecting the molecular dimension of said dopant or dopants, or
   • tailoring the pore structure of said doped inorganic adsorbent material through the doping of said doped inorganic adsorbent material,
   • or combinations thereof.

2. A method according to claim 1, such that said doped inorganic adsorbent material has an adsorption capacity towards at least one of said selected solute species which is at least 8 mg/g, preferably at least 10 mg/g, more preferably at least 12 mg/g, greater than the adsorption capacity of the corresponding undoped reference inorganic adsorbent material, or alternatively is at least 30%, preferably at least 35%, more preferably at least 40%, greater than the adsorption capacity of the corresponding undoped reference inorganic adsorbent material, said adsorption capacity measured according to the Adsorption Capacity Test Method described herein.

3. A doped inorganic adsorbent material for adsorbing one or more selected solute species from a gas-phase or from a liquid-phase, said doped inorganic adsorbent material being doped with one or more suitable dopants, wherein said dopant, or at least one of said dopants, has a concentration of more than 1,000 ppm, preferably of more than 2,000 ppm, more preferably of more than 5,000 ppm.

4. A doped inorganic adsorbent material according to claim 3, wherein said dopant or at least one of said dopants has a largest molecular dimension of at least 0.5 nm, preferably of at least 0.7 nm, more preferably of at least 1 nm, said molecular dimension evaluated at the synthesis conditions of said doped inorganic adsorbent material.

5. A doped inorganic adsorbent material for adsorbing one or more selected solute species from a gas-phase or from a liquid-phase, said doped inorganic adsorbent material being doped with one or more suitable dopants, wherein said dopant or at least one of said dopants has a largest molecular dimension of at least 0.5 nm, preferably of at least 0.7 nm, more preferably of at least 1 nm, said molecular dimension evaluated at the synthesis conditions of said doped inorganic adsorbent material.

6. A doped inorganic adsorbent material for adsorbing one or more selected solute species from a gas-phase or from a liquid-phase, said doped inorganic adsorbent material being doped with one or more suitable dopants, wherein said dopant, or at least one of said dopants, is selected from metals in finely divided form, preferably from colloidal metals.

7. A doped inorganic adsorbent material according to claim 6, wherein said metal in finely divided form is a colloidal metal selected from the group consisting of colloidal gold, silver, copper, platinum and platinum group metals, zinc, cadmium, mercury, lead, arsenic, antimony, manganese.

8. A doped inorganic adsorbent material according to claim 7, wherein said colloidal metal is colloidal gold or colloidal silver.

9. A doped inorganic adsorbent material according to any of claims 6 to 8, wherein said metal in finely divided form has a concentration of from 10 to 1,000 ppm, preferably of from 100 to 600 ppm.

**10.** A doped inorganic adsorbent material for adsorbing one or more selected solute species from a gas-phase or from a liquid-phase, said doped inorganic adsorbent material being doped with one or more suitable dopants, wherein said dopant, or at least one of said dopants, is selected from organo-metallic compounds or complexes.

**11.** A doped inorganic adsorbent material according to claim 10, wherein said organo-metallic compound or complex is selected from Cu-phthalocyanines and metallocene compounds.

**12.** A doped inorganic adsorbent material according to any of claims 10 or 11, wherein said organo-metallic compound or complex has a concentration of from 10 to 1,000 ppm, preferably of from 100 to 600 ppm, said concentration referred to the metal moiety in said organo-metallic compound or complex.

**13.** A doped inorganic adsorbent material according to any of claims 10 or 11, wherein said organo-metallic compound or complex has a concentration of more than 1,000 ppm, preferably of more than 2,000 ppm, more preferably of more than 5,000 ppm, said concentration referred to the organic moiety of said organo-metallic compound or complex.

**14.** A doped inorganic adsorbent material for adsorbing one or more selected solute species from a gas-phase or from a liquid-phase, said doped inorganic adsorbent material being doped with one or more suitable dopants, wherein said dopant, or at least one of said dopants, is selected from precipitation salts of a weak acid and of a strong base, or alternatively from precipitation salts of a strong acid and of a weak base.

**15.** A doped inorganic adsorbent material according to claim 14, wherein said precipitation salt has a concentration of from 1% to 50% by weight, preferably of from 5% to 40% by weight, more preferably of from 8% to 35% by weight.

**16.** A doped inorganic adsorbent material for adsorbing one or more selected solute species from a gas-phase or from a liquid-phase, said doped inorganic adsorbent material being doped with at least two dopants, said at least two dopants selected from metals in finely divided form, preferably from colloidal metals, and from precipitation salts of a weak acid and of a strong base, or alternatively of a strong acid and of a weak base.

**17.** A doped inorganic adsorbent material according to any of claim 3 to 16, wherein said doped inorganic adsorbent material comprises silica; alumina; silicates; natural and synthetic aluminosilicates; silica gel.

**18.** A doped inorganic adsorbent material according to claim 17, wherein said doped inorganic adsorbent material comprises active silica.

**19.** A method for manufacturing a doped inorganic adsorbent material for adsorbing one or more selected solute species from a gas-phase or from a liquid-phase, said doped inorganic adsorbent material being doped with one or more suitable dopants, said doped inorganic adsorbent material having pores with a predetermined selected pore size, said method comprising the steps of:

- synthesizing said doped inorganic adsorbent material at specific synthesis conditions in the presence of a suitable dopant or dopants, said dopant or dopants selected in order to have a molecular dimension at said synthesis conditions which is similar to said predetermined selected pore size in said doped inorganic adsorbent material;

- at least partially removing said dopant or dopants from said doped inorganic adsorbent material.

**20.** A method according to claim 19, wherein said dopant, or at least one of said dopants, has a concentration of more than 15,000 ppm, preferably of more than 18,000 ppm, more preferably of more than 20,000 ppm.

**21.** Use of a doped inorganic adsorbent material according to any of claims 3 to 18, or manufactured according to the method of claims 19 to 20, as a material for adsorbing one or more selected solute species from a gas-phase or from a liquid-phase, in one of the following fields: industrial adsorption processes in gas- and liquid-phase, treatment of foodstuff and beverages, treatment of pharmaceuticals, delivery of actives, treatment or purification of biological fluids, in consumer goods, in odour control.

**European Patent Office**

**EUROPEAN SEARCH REPORT**

Application Number

EP 01 11 9181

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 6 159 898 A (V.I. KANAZIREV) 12 December 2000 (2000-12-12) * column 3, line 31 – line 33 * * column 7, line 21 – line 27 * * column 8, line 35 – line 47 * | 1-3,17, 21 | B01J20/10 B01J20/02 B01J20/08 B01J20/16 B01J20/32 |
| X | US 4 639 259 A (M.J. PEARSON) 27 January 1987 (1987-01-27) * column 4, line 34 – line 37 * * column 4, line 50 – line 64 * | 1-3,17, 21 | |
| X | US 5 558 771 A (HAGEN DONALD F ET AL) 24 September 1996 (1996-09-24) * column 4, line 60 * * column 9, line 32 – line 36; example 1 * | 3,4,6-9, 17,18,21 | |
| X | US 5 167 942 A (KOWALAK STANISLAW ET AL) 1 December 1992 (1992-12-01) * column 16, line 14 – line 26 * * column 15, line 62 – line 65 * * column 17; example 3 * | 1,10,11, 17,21 | |
| X | US 4 892 567 A (YAN TSOUNG Y) 9 January 1990 (1990-01-09) * column 4, line 13 – line 39 * | 3,6-9, 17,21 | TECHNICAL FIELDS SEARCHED (Int.Cl.7) B01J |
| X | US 5 316 998 A (J.S. LEE) 31 May 1994 (1994-05-31) * column 1, line 38 – line 48; claim 1 * * column 6, line 12 – line 35 * | 1,3,17, 21 | |

--/--

The present search report has been drawn up for all claims

| Place of search | Date of completion of the search | Examiner |
|---|---|---|
| THE HAGUE | 11 February 2002 | Hilgenga, K |

| | European Patent Office | EUROPEAN SEARCH REPORT | Application Number EP 01 11 9181 |

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | DATABASE WPI<br>Section Ch, Week 199837<br>Derwent Publications Ltd., London, GB;<br>Class D22, AN 1998-433518<br>XP002189027<br>& JP 10 182142 A (OZAKI KOGYO KK),<br>7 July 1998 (1998-07-07)<br>* abstract * | 6-8,17,<br>21 | |
| X | DATABASE WPI<br>Section Ch, Week 199333<br>Derwent Publications Ltd., London, GB;<br>Class D22, AN 1993-260971<br>XP002189028<br>& JP 05 177131 A (NIPPON STEEL CORP),<br>20 July 1993 (1993-07-20)<br>* abstract * | 6,7,17,<br>21 | |
| X | US 5 321 102 A (LOY DOUGLAS A ET AL)<br>14 June 1994 (1994-06-14)<br>* column 2, line 6 - line 33 *<br>* column 2, line 55 - line 68; claims<br>17,19 *<br>* column 3, line 35 - line 42 * | 1,19,21 | TECHNICAL FIELDS<br>SEARCHED (Int.Cl.7) |
| X | PATENT ABSTRACTS OF JAPAN<br>vol. 016, no. 180 (C-0935),<br>30 April 1992 (1992-04-30)<br>& JP 04 021641 A (JGC CORP;OTHERS: 02),<br>24 January 1992 (1992-01-24)<br>* abstract * | 1,3,17,<br>21 | |
| X | FR 2 795 066 A (AGENCY OF INDUSTRIAL<br>SCIENCE AND TECHNOLOGY)<br>22 December 2000 (2000-12-22)<br>* page 4, line 4 - line 10 *<br>* page 6, line 2 - line 6 *<br>* page 15; example 1 * | 1,3-5,<br>17,19-21 | |

-/--

The present search report has been drawn up for all claims

| Place of search | Date of completion of the search | Examiner |
|---|---|---|
| THE HAGUE | 11 February 2002 | Hilgenga, K |

EPO FORM 1503 03.82 (P04C01)

**European Patent Office**

## EUROPEAN SEARCH REPORT

Application Number

EP 01 11 9181

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 4 426 365 A (J. MAGDER) 17 January 1984 (1984-01-17) * column 3, line 64 - column 4, line 3 * * column 3, line 47 - line 48; claims 1,10,13 * | 14,15, 17,21 | |
| A | WO 99 40953 A (THE PROCTER & GAMBLE) 19 August 1999 (1999-08-19) * claims 1-3 * | 1,17,18, 21 | |
| A | PATENT ABSTRACTS OF JAPAN vol. 004, no. 135 (C-025), 20 September 1980 (1980-09-20) & JP 55 084536 A (IMAEDA KAZUO;OTHERS: 01), 25 June 1980 (1980-06-25) * abstract * | | |

TECHNICAL FIELDS SEARCHED (Int.Cl.7)

The present search report has been drawn up for all claims

| Place of search | Date of completion of the search | Examiner |
|---|---|---|
| THE HAGUE | 11 February 2002 | Hilgenga, K |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.**  EP 01 11 9181

This annex lists the patent family members relating to the patent documents cited in the above-mentioned European search report.
The members are as contained in the European Patent Office EDP file on
The European Patent Office is in no way liable for these particulars which are merely given for the purpose of information.

11-02-2002

| Patent document cited in search report | | Publication date | Patent family member(s) | | Publication date |
|---|---|---|---|---|---|
| US 6159898 | A | 12-12-2000 | US | 5856265 A | 05-01-1999 |
| | | | AU | 1603499 A | 19-06-2000 |
| | | | WO | 0032309 A1 | 08-06-2000 |
| US 4639259 | A | 27-01-1987 | AU | 576165 B2 | 11-08-1988 |
| | | | AU | 6356486 A | 16-04-1987 |
| | | | CA | 1239771 A1 | 02-08-1988 |
| | | | DE | 3673985 D1 | 11-10-1990 |
| | | | EP | 0233394 A2 | 26-08-1987 |
| | | | JP | 6018639 B | 16-03-1994 |
| | | | JP | 62087244 A | 21-04-1987 |
| US 5558771 | A | 24-09-1996 | US | 5492627 A | 20-02-1996 |
| | | | AU | 2516295 A | 25-01-1996 |
| | | | DE | 69504980 D1 | 29-10-1998 |
| | | | DE | 69504980 T2 | 12-05-1999 |
| | | | EP | 0767701 A1 | 16-04-1997 |
| | | | JP | 10502018 T | 24-02-1998 |
| | | | WO | 9600607 A1 | 11-01-1996 |
| US 5167942 | A | 01-12-1992 | AU | 645387 B2 | 13-01-1994 |
| | | | AU | 9058191 A | 25-06-1992 |
| | | | CA | 2095614 A1 | 22-05-1992 |
| | | | DE | 69109131 D1 | 24-05-1995 |
| | | | DE | 69109131 T2 | 07-12-1995 |
| | | | EP | 0558644 A1 | 08-09-1993 |
| | | | HK | 1006305 A1 | 19-02-1999 |
| | | | JP | 6502837 T | 31-03-1994 |
| | | | WO | 9209527 A1 | 11-06-1992 |
| US 4892567 | A | 09-01-1990 | AU | 626593 B2 | 06-08-1992 |
| | | | AU | 4345389 A | 18-04-1991 |
| | | | EP | 0448562 A1 | 02-10-1991 |
| | | | WO | 9104096 A1 | 04-04-1991 |
| US 5316998 | A | 31-05-1994 | AU | 4288793 A | 29-11-1993 |
| | | | CA | 2134480 A1 | 11-11-1993 |
| | | | CN | 1081936 A | 16-02-1994 |
| | | | EP | 0639112 A1 | 22-02-1995 |
| | | | FR | 2690855 A1 | 12-11-1993 |
| | | | GB | 2282591 A ,B | 12-04-1995 |
| | | | JP | 7506048 T | 06-07-1995 |
| | | | NO | 944164 A | 01-11-1994 |
| | | | WO | 9322049 A1 | 11-11-1993 |
| | | | US | 5505926 A | 09-04-1996 |
| | | | US | 5595954 A | 21-01-1997 |

EPO FORM P0459

For more details about this annex : see Official Journal of the European Patent Office, No. 12/82

**ANNEX TO THE EUROPEAN SEARCH REPORT
ON EUROPEAN PATENT APPLICATION NO.**

EP 01 11 9181

This annex lists the patent family members relating to the patent documents cited in the above-mentioned European search report.
The members are as contained in the European Patent Office EDP file on
The European Patent Office is in no way liable for these particulars which are merely given for the purpose of information.

11-02-2002

| Patent document cited in search report | | Publication date | Patent family member(s) | | Publication date |
|---|---|---|---|---|---|
| JP 10182142 | A | 07-07-1998 | NONE | | |
| JP 5177131 | A | 20-07-1993 | NONE | | |
| US 5321102 | A | 14-06-1994 | NONE | | |
| JP 04021641 | A | 24-01-1992 | JP | 2911961 B2 | 28-06-1999 |
| FR 2795066 | A | 22-12-2000 | JP | 3128593 B2 | 29-01-2001 |
| | | | JP | 2001002409 A | 09-01-2001 |
| | | | DE | 10013276 A1 | 21-12-2000 |
| | | | FR | 2795066 A1 | 22-12-2000 |
| US 4426365 | A | 17-01-1984 | AU | 5689473 A | 19-12-1974 |
| | | | BE | 801007 A1 | 01-10-1973 |
| | | | DE | 2330234 A1 | 03-01-1974 |
| | | | FR | 2189112 A1 | 25-01-1974 |
| | | | GB | 1433762 A | 28-04-1976 |
| | | | IT | 985466 B | 30-11-1974 |
| | | | JP | 49063685 A | 20-06-1974 |
| | | | NL | 7307675 A | 18-12-1973 |
| | | | US | 4323544 A | 06-04-1982 |
| WO 9940953 | A | 19-08-1999 | EP | 0937467 A1 | 25-08-1999 |
| | | | AU | 2070199 A | 30-08-1999 |
| | | | BR | 9907932 A | 24-10-2000 |
| | | | CN | 1291108 T | 11-04-2001 |
| | | | EP | 1056483 A1 | 06-12-2000 |
| | | | WO | 9940953 A1 | 19-08-1999 |
| JP 55084536 | A | 25-06-1980 | NONE | | |

EPO FORM P0459

For more details about this annex : see Official Journal of the European Patent Office, No. 12/82